# EUROPÄISCHE PATENTSCHRIFT

(11) **EP 1 670 109 B1**
(45) Veröffentlichungstag und Bekanntmachung des Hinweises auf die Patenterteilung: **28.04.2010**
(21) Anmeldenummer: 06007022.4
(22) Anmeldetag: 04.11.1996
(51) Int. Cl.: H02G 1/12

(54) **Abisoliervorrichtung**
Insulation stripping device
Dispositif de dénudage

(30) Priorität: 06.11.1995 CH 323595
(43) Veröffentlichungstag der Anmeldung: 14.06.2006
(62) Teilanmeldung aus: 02020379.0
(73) Patentinhaber: Schleuniger Holding AG, 3608 Thun (CH)
(72) Erfinder: Locher, Beat, 3700 Spiez (CH)
(74) Vertreter: Rosenich, Paul

(56) Entgegenhaltungen:
- EP-A- 0 234 929
- WO-A-95/13641
- JP-A- 4 261 316

## Beschreibung

Die Erfindung betrifft eine Trenn- und Abisoliervorrichtung zur Kabelverarbeitung, mit der Kabel durchtrennt bzw. deren Isolierschicht eingeschnitten und abgezogen werden kann.

Insbesondere betrifft sie eine Abisoliervorrichtung nach dem Oberbegriff des Anspruches 1. Solche Vorrichtungen sind z.B. aus WO 95/13641 bekannt.

Der Europäische Recherchenbericht dieser Patentanmeldung zitiert als Hintergrund zum Stand der Technik die WO95/13641A1. EP234929A1 und die JP04261216. Diese Dokumente beschreiben Abisoliermaschinen mit Messen und Führungen.

Da diese Anmeldung eine Teilanmeldung zur EP-96938061.7-2207 (Publikationsnummer EP860044) ist, wird hinsichtlich des Standes der Technik auf die dortigen Ausführungen verwiesen.

Probleme ergeben sich im Stand der Technik ebenso beim Auswurf des Abfalls (Slug) an Isolationsresten, die durch die Messer vom Leiter abgezogen werden und bisher fallweise nicht ordentlich entfernt wurden.

Ein weiteres Problem ergibt sich, dass bei bekannten Führungen mit starren Innendurchmessern (z.B. Eubanks 9800) dünnere, flexible Kabel nicht zentrisch geführt werden, was zu Problemen (häufigere Pannen) beim Kabelvorschub führen kann.

Der Erfindung liegt somit die Aufgabe zugrunde, eine verbesserte Abisoliervorrichtung zu schaffen, die hinsichtlich der Universalität verbessert ist, grössere Abisolierlängen erlaubt und die Nachteile bei den oben erwähnten Konstruktionen vermeidet.

Durch die erfindungsgemässe Vorrichtung mit den Merkmalen des Anspruches 1 wird diese Aufgabe gelöst. Die neuen Führungen und deren Antrieb führen zu einer universellen, vollautomatisch tätigen und frei programmierbaren Trenn- bzw. Abisoliermöglichkeit. Diese wird durch zusätzliche, neue Verarbeitungsschritte bei Bedarf noch ergänzt. Bekannte Nachteile sind vermieden.

Auch die erfindungsgemäss mögliche kompakte Bauform wirkt sich in der Praxis günstig aus.

Weitere Merkmale der Erfindung sind in den abhängigen Ansprüchen beschrieben.

Bei einer besonderen Ausführung sind beliebige Werkzeugpositionen seitlich nebeneinander vorgesehen. Mit einer Schrittmotorsteuerung sind diese Werkzeugpositionen programmierbar angesteuert, so dass einerseits in unterschiedlichen Werkzeugpositionen das Kabel - oder auch mehrere nebeneinander liegende Kabel - das, bzw. die in einer Position gehalten werden, bearbeitet werden können. Das gilt für Endloskabelverarbeitungen ebenso wie für jene Abisoliervorrichtungen, an denen eine Bedienperson oder ein Manipulator ein Kabelende in die Vorrichtung einführt und anschliessend wieder herauszieht

Zweitens werden auch andere Arbeitsvorgänge erlaubt, wie z.B. Sägen, Einschneiden, Vertwisten, Verformen, Crimpen usw. des Kabels durch das Zusammenführen der Messer bzw.

Eine vorgesehene motorische Steuerbarkeit des Anpressdruckes bzw. des Abstandes der Vorschubrollen bzw. Vorschubbänder zueinander bringt den Vorteil, dass während des Abziehens der Anpressdruck auf das Kabel erhöht werden kann, um so einen Schlupf zu verhindern, bzw. um mehr Kraft auf das Kabel aufzubringen. Würde der Anpressdruck, wie im Stand der Technik bekannt, über den gesamten Vorgang aufrecht erhalten bleiben, hätte das den Nachteil, dass das Kabel bzw. sein Mantel über seine ganze Länge Quetschungen erleidet, die neu so höchstens an einem kleinen Bereich auftreten. Ausserdem wird erfindungsgemäss die Abnutzung des Riemens reduziert. Da der Abziehwiderstand am Anfang der Abziehbewegung in der Regel am grössten ist, kann vorzugsweise der Anpressdruck über einen Abziehweg von z.B. 4mm erhöht und anschliessend wieder auf ein geringeres Mass gesenkt werden. Allfällige Markierungen bzw. Quetschungen sind somit auf ca. 4mm beschränkt.

Als weitere Ausgestaltung ist die individuelle Öffenbarkeit der Rollen bzw. Bänder zu sehen, das heisst, dass die Antriebseinheiten der Bänder sowohl vor als auch nach dem Werkzeughalter voneinander unabhängig geöffnet und geschlossen bzw. in ihrem Anpressdruck eingestellt werden können. Bevorzugt können die Rollen nicht nur im Anpressdruck eingestellt werden und mittels Elektromotor auf einen gewünschten Abstand zueinander gefahren werden, sondern sie können darüber hinaus gegebenenfalls auch vollständig geöffnet werden. Das gekoppelte Öffnen und Schliessen der beiden Rollen- bzw. Bandpaare mit einem einzigen Antriebsmotor und einem Drehteller ist per se bekannt aus einer 1989 veröffentlichten Maschine ATC 9000 der Sutter Electronic AG Thun, Schweiz, deren diesbezügliche Lehre als im Rahmen dieser Erfindung liegend geoffenbart gilt, wobei gegenüber dem Bekannten eine vollständig unabhängige Öffenbarkeit der Rollen bzw. Bänder vorgesehen ist.

Als weiterer Vorteil einer unabhängigen Offenbarkeit des zweiten Rollen- bzw. Bandpaares von der Öffnung des ersten Rollen- bzw. Bandpaares ist, dass mit Hilfe des ersten Rollenpaares ein Vorabzug von z.B. 130mm durchgeführt werden kann, nachdem das Kabel in gewünschter Länge, z.B. 500mm, durch das zweite Rollenpaar bereits durch ist, so dass auch lange Abisolierlängen, z.B. für Netzkabel, erfolgreich abisoliert werden können. Denkbar ist auch, noch grössere Längen vorabzuziehen, wobei später von Hand der Rest der Isolation vom Leiter abgezogen wird.

Für einen längeren Vollabzug oder längeren Teilabzug könnten umgekehrt nach erfolgtem Vorabzug gemäss obiger Verfahrensangabe, der Anpressd ruck des zweiten Rollen- bzw. Bandpaares erhöht und den Mantel unter Haftreibung durch Drehung in Abzugsrichtung vom Leiter abgezogen werden.

Wenn man ein langes Abisolierstück in wenigen Einzelschritten abisolieren will, kann man dies erfindungsgemäss dadurch durchführen, dass bei jedem Teilschritt das zweite Rollen- bzw. Bandpaar geöffnet wird. Gegenüber dem Bekannten (z.B. KODERA Type 36 mit einem besonders grossen Abstand zwischen den linken und rechten Vorschubrollen) hat man den Vorteil, auch kurze Kabelstücke abisolieren zu können. Gegenüber dem Bekannten (z.B. KODERA Type 34 mit einem begrenztem Abstand zwischen den linken und rechten Vorschubrollen) hat man andererseits den Vorteil einer nahezu beliebigen Abisolierlänge und ist überhaupt nicht eingeschränkt auf den Abstand zwischen Werkzeughalter und zweitem, axial dahinterliegenden Rollenpaar, der bisher bei allen bekannten Maschinen den Abisolierabstand begrenzt.

Erwähnenswert liegen im Rahmen der Erfindung auch Kombinationen zwischen den dargestellten Merkmalen bzw. einzelnen, voneinander unabhängig anwendbaren Erfindungsaspekten.

Anhand von beispielhaften Figuren, die für die unterschiedlichen Erfindungsaspekte nicht einschränkend sind, werden bevorzugte Ausführungsbeispiele dargestellt.

Die Figuren sind zusammenhängend und übergreifend beschrieben, da gleiche Bezugszeichen gleiche Bauteile und gleiche Bezugszeichen mit unterschiedlichen Indizes ähnliche Bauteile mit gleichen oder ähnlichen Funktionen bedeuten.

Es zeigen dabei die
Fig.1 eine Abisoliermaschine mit Rollenantrieb und Mpdulaufbau;
Fig.2 erfindungsgemässe Verfahrensschritte zum Abisolieren grösserer Längen;
Fig.3 symbolische Beispiele unterschiedlicher Modulkonfiguration eines neuartigen Modulaufbaus einer Abisoliermaschine mit Rollenantrieb;
Fig.4 symbolische Beispiele gemäss Fig.3 jedoch mit Bandantrieb;
Fig.5a;b eine Serie von acht unterschiedlichen Verfahrensschritten eines nicht zur Erfindungs gehörenden Abisoliervorgangs an einem symbolisch dargestellten Aufbau mit neuartigen Schiebeführungen;
Fig. 6 einen Ausschnitt aus einer neuartigen Abisoliermaschine mit Schiebeführungen gemäss Fig.5;
Fig.7 den linken Teil einer Draufsicht einer Vorrichtung mit Bandantrieb 12 (Grundriss von Fig. 9) und einem Schwenkantrieb für die Führung;
Fig.8 den rechten Teil derselben Draufsicht;
Fig.9 analog dazu den linken Teil einer nicht vollständigen Ansicht mit abgenommenem oberen Band und mit einer schwenkbaren Kabelführung vor den Werkzeugen.

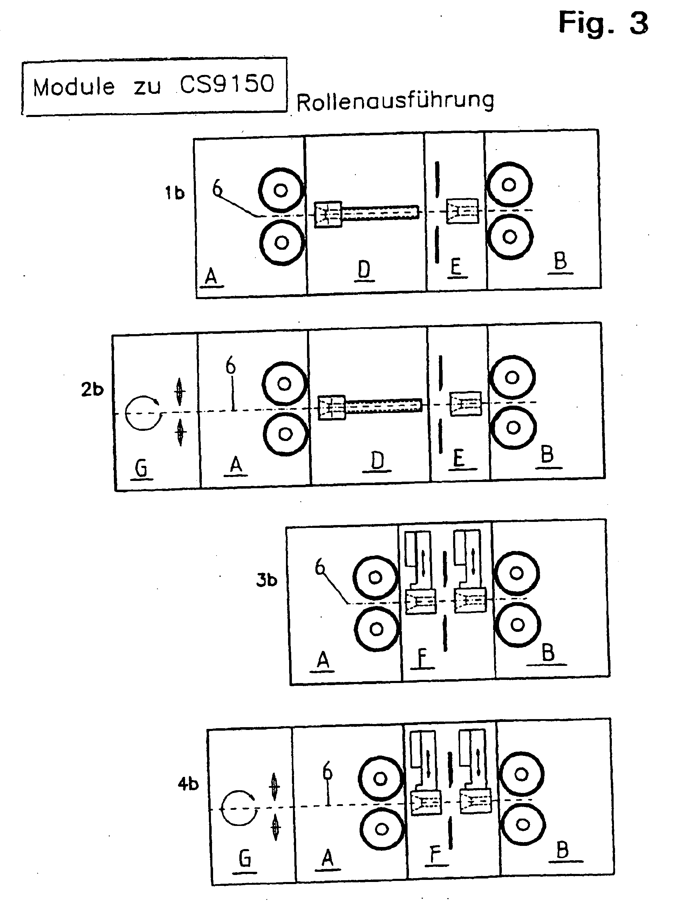

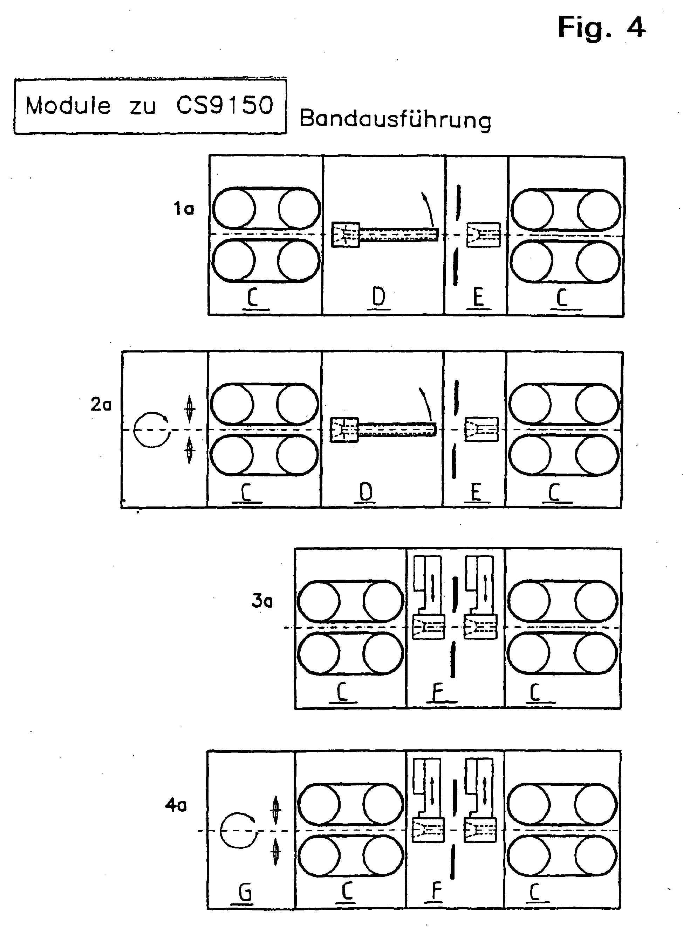

Fig.3 bezieht sich auch auf einen unabhängigen, jedoch bevorzugt bei obigen Kabelverarbeitungsmaschinen einsetzbaren, neuen Aspekt eines modularen Aufbaus einer Abisoliermaschine. Die Beispiele 1 b bis 4b zeigen dabei symbolisch Vorschubmodule A und B, die jedoch zum Teil auch ersetzt werden könnten mit anderen Vorschubmodulen , z.B. einem Vorschubmodul C gemäss Fig.4, so dass z.B. ein Vorschubmodul A unter Entfall des Moduls B mit einem Vorschubmodul C ergänzt wird.

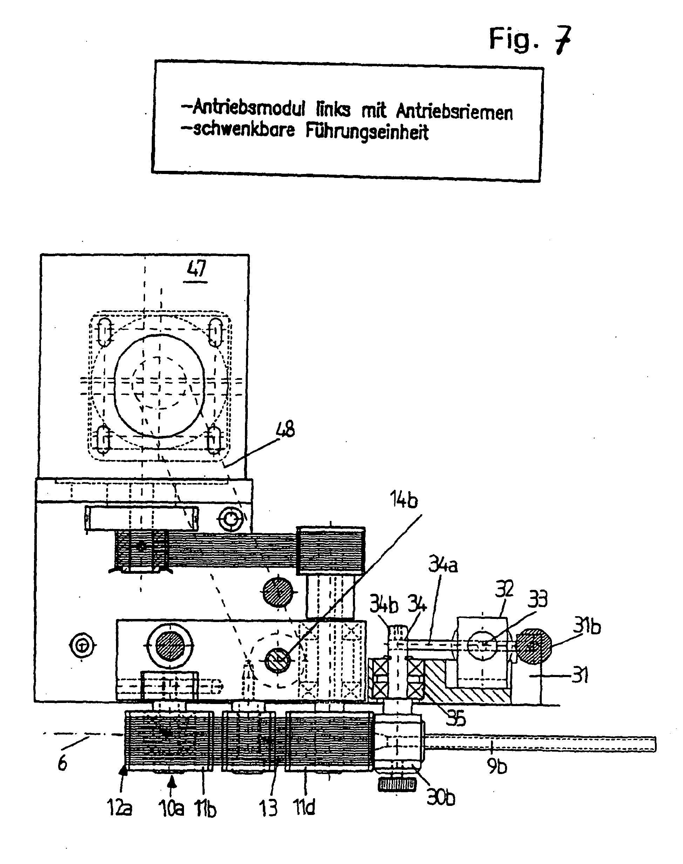

Ein weiters häufig zum Einsatz gelangendes Modul D mit schwenkbarem Führungsrohr kommt vor einem Schneide- bzw. Messermodul E zum Einsatz. Das Messermodul ist so aufgebaut, dass eine verschiebbare Führung angeordnet ist. Mit Fig.7 wird die Funktion des schwenkbaren Führungsrohres erläutert.

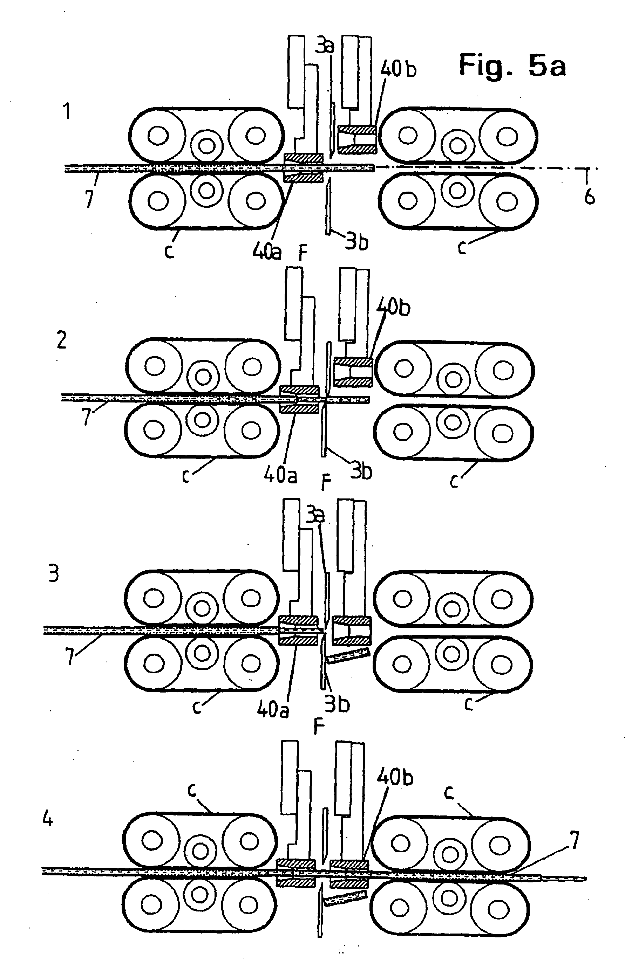

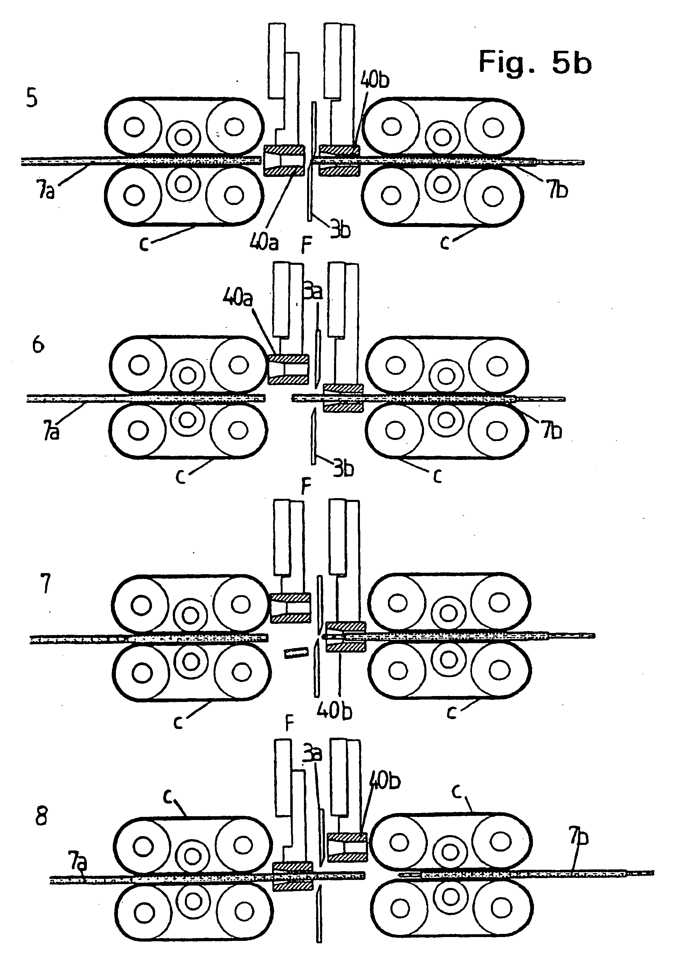

Module D und E können, wie in den Beispielen 3b, 4b sowie 3a und 4a dargestellt, durch ein Modul F ersetzt werden, das wenigstens eine, vorzugsweise aber, wie dargestellt, zwei verschiebbare Führungen aufweist, die ein neues spezielles Abisolierverfahren ermöglichen, wie mit Fig. 5a und b erläutert wird.

Die Abisoliervorrichtung kann erfindungsgemäss durch beliebige weitere Module ergänzt werden, wobei als Beispiel ein Modul G eingezeichnet ist, das eine "Coax-Box" darstellt, nämlich eine rotativ wirkende Einschneidebox, wie sie insbesondere für Koaxialkabel zum Einsatz gelangen kann. Eine solche Coax-Box ist beispielsweise durch die Schleuniger AG unter der Bezeichnung CA 9170 auf den Markt gebracht worden, weshalb auf deren Aufbau nicht näher einzugehen ist. Der Fachmann kann die diesbezügliche Lehre problemlos von dort übernehmen. Sie gilt somit als im Rahmen dieser Anmeldung liegend geoffenbart

Entscheidend ist bei diesem Aspekt, dass ein Grundaufbau angeboten wird, der es erlaubt in universeller Art und Weise den Abisolierbedürfnissen zu entsprechen. Der sich daraus ergebende Vorteil liegt zuerst in der Herstellung, da in der Fabrik die Module unabhängig voneinander erzeugt und gelagert werden können. In zweiter Linie ergibt sich ein Vorteil beim Anwender, dessen Abisolierbedürfnisse sich gegebenenfalls mit der Zeit verändern. Mit dem Austausch der entsprechenden Module vor Ort kann die erfindungsgemässe Vorrichtung nachträglich adaptiert werden.

Die technische Realisierung dieses Aspekts liegt in linearen Führungen im Grundgehäuse, die mit gegengleichen Führungen an den Modulen kooperieren, so dass die Module mit ihren Arbeitselementen zentrisch zur Kabelvorschubachse 6 zu liegen kommen. Dieses erlaubt im Vergleich zum Stand der Technik auch eine raschere Montage kompletter Abisolier- bzw. Kabelbearbeitungsvorrichtungen.

Die in Fig.5a und b gezeigten neuen und vorteilhaften Verfahrensstufen stellen den Kern eines Ausführungsbeispiels dieser Ausscheidungsanmeldung dar: Durch kurze - insbesondere linear -verschiebbare Führungshülsen 40a und b werden die Kabelendstücke jeweils vor dem Einschneiden oder Abisolieren durch die Messer 3a und b zentriert - vorteilhafterweise - in unmittelbarer Messernähe gehalten. Für nicht näher dargestellte Anwendungsfälle ist selbstverständlich auch der Verzicht auf eine der beiden Führungshülsen 40 möglich, insbesondere dann, wenn in der Folge der Band- oder Rollenvorschub näher an die Messer 3 herangerückt wird.

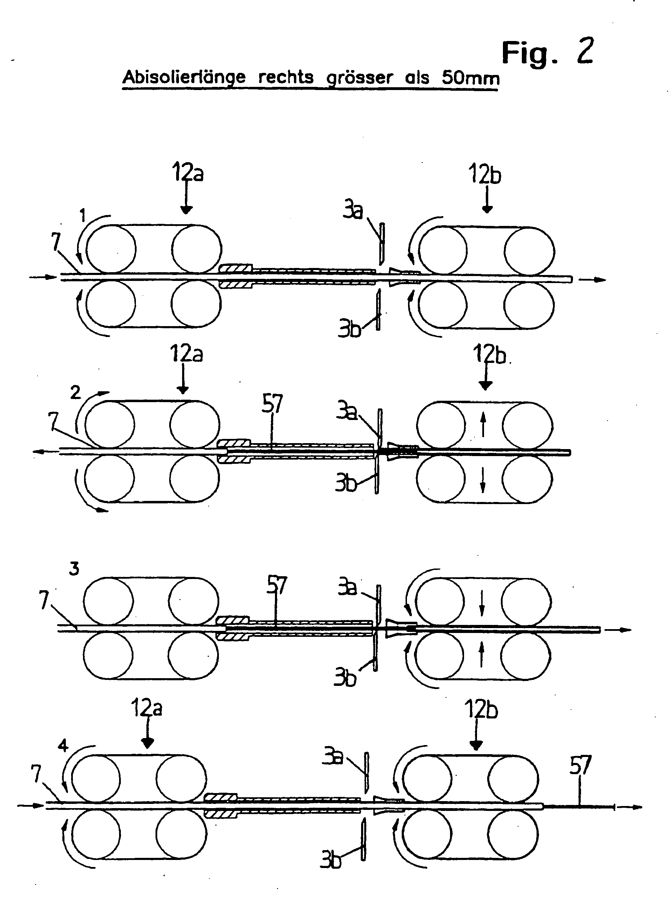

Die Erfindung ergibt sich durch den Ersatz einer Führungshülse 40 mit einem Modul D, wie z.B. in Fig. 2-4 und 7-9 angegeben. Der als Modul C symbolisch dargestellte Bandantrieb kann komplett oder partiell mit Rollenantrieben vertauscht werden.

Die Aspekte der Erfindung gelten in erfinderischer Weise selbstverständlich auch für Messeranordnungen, bei denen mehrere Messer 3 entlang der Kabelachse (Vorschubachse) 6 versetzt angeordnet sind, wie z.B. im Abisoliermodell CCM 2000 der Sutter Electronic AG.

Solche Kombinationen liessen gegebenenfalls die Verarbeitungsgeschwindigkeit von Kabeln durch die erfindungsgemässen Verfahrensschritte und verschiebbaren Führungshülsen noch steigern.

Im Rahmen eines alternativen Aufbaus können dementsprechend - insbesondere unter Ausnutzung des Modulaspekts auch mehrere Messermodule F mit seitlich verschiebbaren Messern hintereinander vorgesehen sein. Varianten mit dazwischen angeordneten zusätzlichen Vorschubmodulen A, B oder C liegen ebenso im Rahmen einer weiteren Ausgestaltung.

Die Erfindung betrifft weiters eine neuartige Mess- und Justiervorrichtung für motorisch zusammenfahrbare Backen, insbesondere Schneidebacken an einer Abisoliermaschine. Das Neue ist die Ausnützung einer gewissen Elastizität zwischen Antriebsmotor und einer Vortriebsspindel, die für den Vorschub der Backen zuständig ist. Die Elastizität kommt durch ein elastisches Kopplungsglied zwischen Antriebsmotor und Spindel zustande, insbesondere ein Zahnriemen, der über Riemenscheiben das Drehmoment des Antriebes auf die Spindel überträgt. Neu ist ausserdem, dass an der Spindel direkt ein Messwertaufnehmer, insbesondere ein Encoder (Drehgeber) angebracht ist. Beim Zusammenfahren der Backen wird dem Encoder der Anschlag der Backen dadurch signalisiert, dass die Backen sich nicht mehr weiter zusammen bewegen und die definitive Anschlagstellung somit am Encoder abgelesen oder abgegriffen - bzw. ein Reset signalisiert werden kann. Der Antriebsmotor z.B. ein Schrittmotor kann erfindungsgemäss infolge der Elastizität jedoch geringfügig weiter gegen die Elastizität des Zahnriemens drehen - und sei es nur, um seinen Schwung abzufedern, ohne die Backen mechanisch zu belasten.

Auch aus der Tatsache, dass der eine Messwertaufnehmer (an der Spindel) zum Stillstand gekommen ist und der andere (z.B. Schrittmotor) noch geringfügig weiterdrehen kann, kann erfindungsgemäss auf die Schliessposition der Backen geschlossen werden. In Ergänzung oder als Alternative ist im Rahmen der Erfindung denkbar, das Drehmoment des Antriebsmotors in Schliessnähe zu reduzieren, um die mechanische Belastung stufig an den Schliessbacken zu reduzieren.

Ein optionaler Zwischenschritt beim Abziehen unter Zuhilfenahme der rechten Bänder mit gesteuertem Anpressdruck führt vorteilhafterweise zu einem Vollabzug langer Isolierstücke mit dem Vorteil, dass ein Überspringen der Abisoliermesser bei starken Haftkräften zwischen Leiter und Isolierung reduziert wird. Dieses ist jedoch nur bei dünnen Kabeln ein Problem, bei stärkeren und vor allem stärkeren Isolationsdicken kommt es beim Bekannten in der Regel sonst zu einem Blockieren des linken Bandantriebes oder zu einem Schlupf der wiederum zu einer Zerstörung der Kabel oder der linken Bänder führen kann.

Die völlig individuelle Einstellbarkeit und Ansteuerbarkeit der vorderen und hinteren Rollen bzw. Bänder erleichtert die Weiterverarbeitung des Kabels, erfordert allerdings auch ausreichend dimensionierte Antriebsmotpre und eine geeignete Software, die nach Kenntnis dieser Patentanmeldung einem Durchschnittsfachmann verständlich und realisierbar wird.

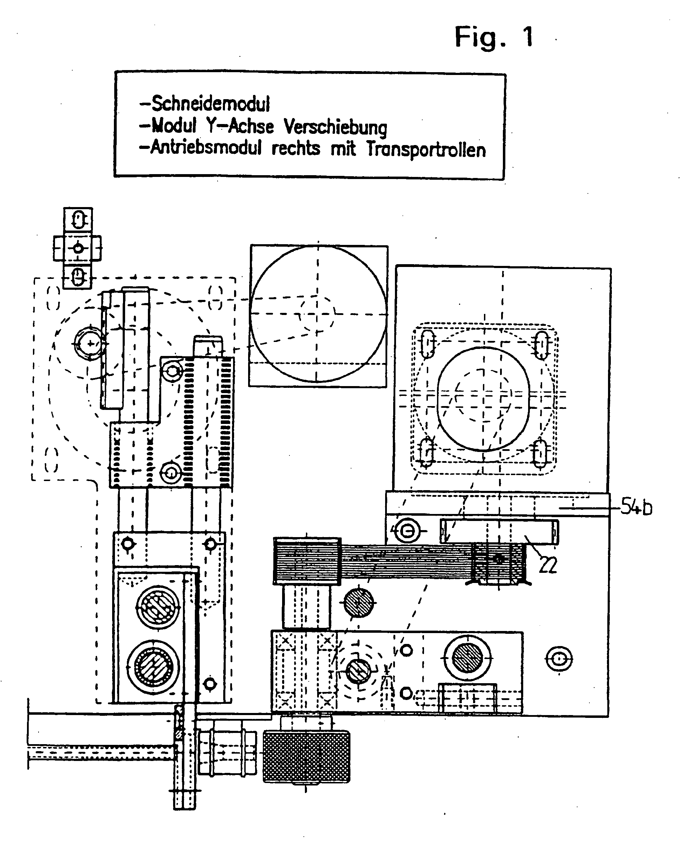

Die bevorzugten Verfahrensschritte gemäss den Schritten 1 bis 8 sind dadurch gekennzeichnet: 1. Einschub des Kabels 7 auf seine vordere Abisolierlänge hinter die Messer 3; Freistellung der hinteren Führungshülse 40b. 2. Schliessen der Messer 3 bis zur Abisoliertiefe und Rückzug des Kabels 7 mittels vorderem Modul C. 3. Positionierung der hinteren Führungshülse 40b, die dabei gleichzeitig - bei Bedarf - das Abfall-Isolationsstück ausstösst, so dass es zu keiner Behinderung im weiteren Ablauf kommt. Gerade dieser Vorgang ist besonders vorteilhaft gegenüber bekannten Lösungen der Firma Eubanks, die zweiteilige Führungshülsen anbietet, die zum Zwecke der Abfallentfernung öffnen und mittels zusätzlicher Mechanik den Abfall ausstossen sollen. Da diese bekannten Aufbauten jedoch danach wieder schliessen, kann es erst recht zu einem Verklemmen von Abfallresten zwischen den Führungshülsenteilen kommen, was erfindungsgemäss entfällt.Als Lösung wurde bei einem anderen Stand der Technik vorgesehen, die Hülsen nach unten offen auszubilden, so dass Abzugsmaterial nach unten herausfallen kann. Der Nachteil bei dieser Konstruktion ist, dass Kabel, insbesondere dünne, flexible, an deren Unterseite nicht geführt sind und es daher zu Störungen beim Betrieb kommen kann. Solche Führungen sind z.B. bei dem Abisoliermodell der Firma Kodera/JP "Kodera 34" geoffenbart. 4. Vorschub des Kabels 7 bis zur Schnittposition unter den Messern 3. Im Falle eines Aufbaus gemäss Fig. 1 oder 2, der für die Anwendung dieses neuen Verfahrens nicht obligatorisch ist, sind die Abisoliermesser 3 und die Trennmesser 3 nebeneinander an den verschiebbaren Messerträgem 1 angeordnet, so dass zwischen Schritt 4 und 5 die Trennmesser 3 in Schnittposition geschoben werden, während in den übrigen Schritten die Abisoliermesser 3 in der dargestellten Position sind. 5. Das Kabel 7 wird durchtrennt. 6. Das zweite Kabelstück 7b wird mittels dem hinteren Vorschubmodul C zurückgeschoben bis zur Abisolierposition des hinteren Kabelendes; die vordere Führungsholse 40a ist freigestellt. Letzteres hat u.a. auch den Effekt, dass ein längeres Kabelendstück abisoliert werden kann, das die Länge zwischen vorderem Modul C und Messer 3 übersteigt. Dieses Kabelendstück kann nämlich - sofern es flexibel genug ist - abgebogen werden, da es durch die vordere Führungshülse 40a seitlich nicht geführt ist. Der selbe Effekt kann bei Bedarf beim Schritt 1-2 auch beim vorderen Kabelende und der Führungshülse 40b ausgenützt werden. 7. Einschneiden und Abziehen des Isolationsstückes (Kabelmantelabfall oder "Slug"). 8. Auswurf des beidseitig abisolierten Kabelstückes 7b und Vorschub des nächsten Kabelstückes 7a gemäss Schritt 1.

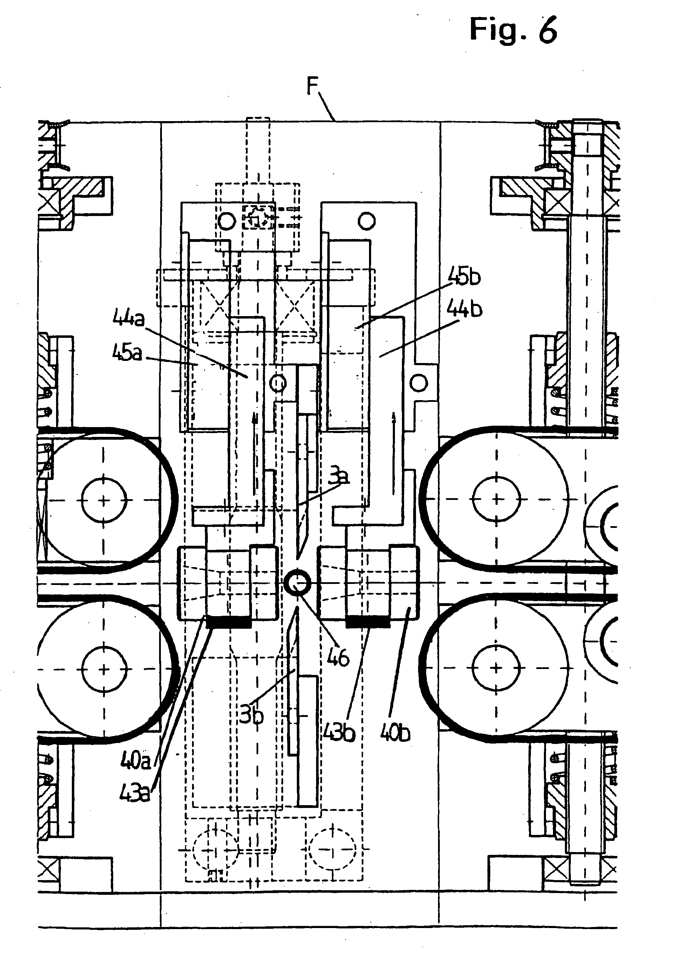

In Fig.6 ist ein Modul F beispielhaft näher dargestellt Bevorzugt sind die erfindungsgemässen Führungshülsen 40 in Schnappverschlüssen 43 an Führungsstangen 44 gehalten, die rechnergesteuert durch in diesem Beispiel pneumatische - Antriebe 45 gehoben oder gesenkt werden können. Die Schnappverschlüsse ermöglichen erfindungsgemäss ein rasches Wechseln von Führungshülsen 40, um diese an unterschiedliche Kabel anzupassen. Die Führungshülsen 40 sind in ihrem Inneren an einer oder beiden Seiten zur Kabeleinführerleichterung bevorzugt trichterförmig angesenkt. Für erfindungsgemässe Anwendungen ist die im Bild linke Führung 40 mit einer herkömmlichen Schwenkführungen ersetzt.

Sie können erfindungsgemäss auch bei beliebigen anderen Abisoliermaschinen erfolgreich eingesetzt werden; z.B. auch bei herkömmlichen rotativen Abisoliervorrichtungen, anstelle von mitrotierenden Zentrierbacken, wie z.B. in den Modellen 207 der Schleuniger Productronic AG oder den zwischenzeitlich vom Markt genommenen Modellen 9200 der Firma Eubanks Monrovia USA.

Zwischen den Führungshülsen 40 befinden sich die Messer 3 bzw. Kabelbearbeitungswerkzeuge, sowie gegebenenfalls eine Pressluftausblasöffnung 46 zum Reinigen der Werkzeuge.

Bei einem besonderen Aspekt können die Bandantriebe 12 jedoch auch zum Abziehen der durchtrennten Kabelmantelstücke eingesetzt werden, wobei durch die bevorzugte Anpressdrucksteuerung der Bandantriebe 12 in Abhängigkeit vom Kabelaufbau bei geschlossenen Abisoliermessern, die das Kabel somit halten, die jeweiligen Bänder - in der Regel wird dies das hintere Bandpaar sein - den Kabelmantel in Abzugsrichtung weiterfördern. In einer besonderen Variante können dabei auch die vorderen Bänder in Gegenrichtung laufen und derart mithelfen, in kürzerer Zeit den Leiter aus dem Mantel zu ziehen.

Als weitere Verfahrensvarianten sind Teilabzüge möglich mit anschliessendem Vollabzug mit Hilfe der Bandantriebe, wie eben beschrieben.

Bei besonderen Aufbauten können mit der erfindungsgemässen Vorrichtung parallel auch mehrere Kabel verarbeitet werden, was zu einer grösseren Effektivität führt. Erfindungsgemäss sind dazu dann auch parallele Führungen 40 oder Schwenkführungen 9 vorgesehen.

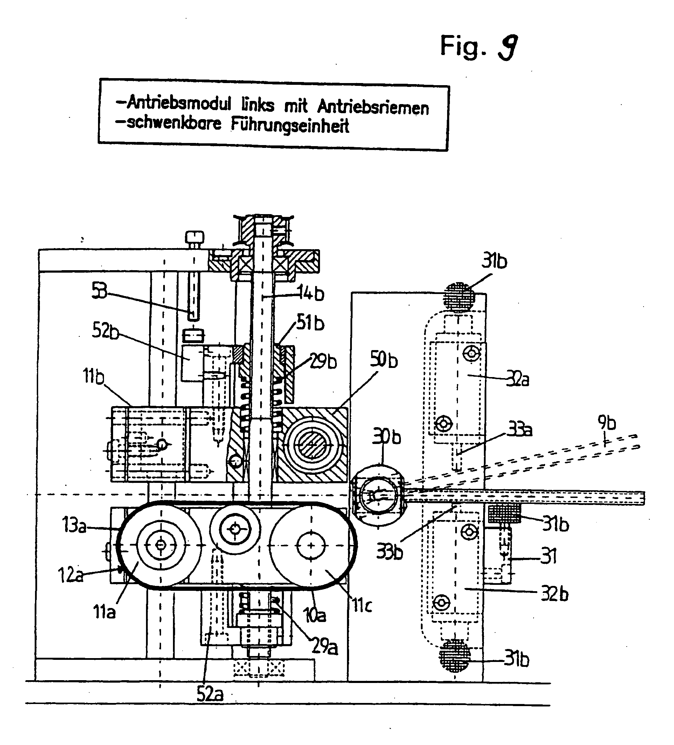

Die Draufsicht gemäss Fig.7 (kompatibel zu Fig.9) zeigt einen vorderen Bandantrieb 12a, der mit seinen Antriebsrollen 11b und 11d ein Kabel entlang der Achse 6 zur verschwenkbaren Führung 9, wie in der EP-A2-234929 fördert. Diese verfügt über ein Führungsrohr 9b, das auswechselbar in einem Schwenkkörper 30b gehalten ist. Der Schwenkkörper 30b ist mit einer Kurbelstange 34 verbunden, die die Schwenkbewegung vom Antrieb 33 auf das Rohr 9b überträgt, während dem Schwenkkörper 30 bzw. der Kurbelstange 34 ein Anschlag 31 mit Gummipuffer 31b zur Abdämpfung zugeordnet ist, da bevorzugt die Längsführung 9 mittels schnellwirkenden Verschiebemagneten 32 angetrieben wird, der mit seinem Stössel 33, der gegebenenfalls ebenso mittels Gummipuffer abgedämpft ist, die Führung 9 schlagartig beschleunigt

Die Kurbelstange ist bei vorliegenden Ausführungsbeispiel zweiteilig ausgebildet, wobei ein Zylinderstift 34a in einer Drehwelle 34b und die wiederum in einem Lager 35 gehalten ist, die mit dem Schwenkkörper 30b verbunden ist. Bei Bedarf kann diese Schwenkführung auch federbelastet sein und/oder um die Achse 6 um 90 oder 180 Grad gedreht angeordnet sein, so dass die Führung 9 nicht nach oben, sondern seitlich oder nach unten ausschwenkt. 47 bezeichnet einen Verstellantrieb für den Bandantrieb 12, der über einen Riemen 48 die Spindel 14b dreht.

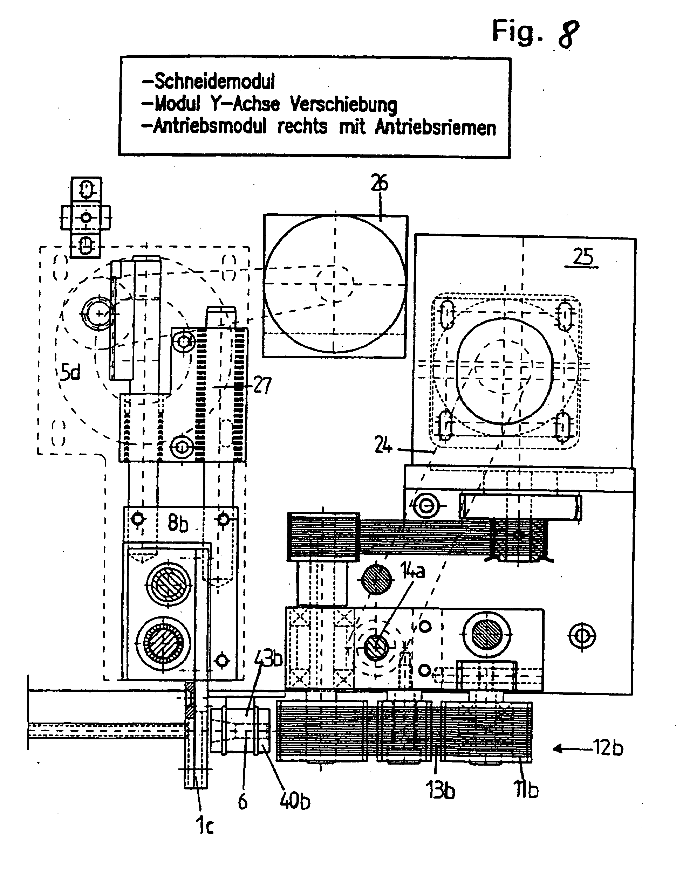

Fig.8 zeigt den rechten Teil desselben Ausführungsbeispiels, wobei 25 den Antrieb und 24 den Riemen für die Einstellung der Spannkraft des Endlosbandantriebes darstellt und mit 26 der gesteuerte (Schritt)motor bezeichnet ist, der das gesteuerte Seitführen der Werkzeughalter 1,2 in den Linearführungen 27 ermöglicht

Die Führung 40b ist bei dieser Ausführungsvariante nicht verschiebbar jedoch mittels Schnappverschluss 43b leicht entfernbar gehalten. Ein gemeinsamer, mittels Antrieb 5d verschiebbarer Halteteil 8b trägt die Werkzeughalter 1

Aus Fig.9 ist ein Detail des Bandantriebes 12a für die neue Vorrichtung mit einem Endlosbandpaar 12 mit Bändern (Zahnriemen) 13, Rollen (Zahnrollen) 11a,c und Andrückrollen zu sehen. Die oberen und unteren Bänder sind voneinander vollständig separierbar. Der Anpressdruck zwischen den Bändern 13 steuert sich über die Druckfeder 29, die den Antriebsrollenhaltekörper 50 in Schliessrichtung vorspannt

Die Vorspannung wird erhöht, indem bei sich berührenden oberen und unteren Bändern 13 die Spindel 14b weiter in Schliessrichtung gedreht wird, so dass die Stellmutter 51 b die Feder 29 weiter komprimiert. Beim Öffnen der Bandantriebe, z.B. für eine Voröffnung zur Vermeidung des verletzenden Anstossens eines Kabels an die Bänder 13, nimmt die Stellmutter 51b den Antriebsrollenhaltekörper 50b über den Mitnahmeteil 52b mit.

Die Öffnungsbewegung ist mittels justierbarem Anschlag 53 begrenzt. In dieser Position wird vorzugsweise gleichzeitig die Schliessbewegung initialisiert. Die Steuerung erfolgt dabei entweder über einen nicht gezeigten Drehencoder an der Welle 14b oder über den gesteuerten Antrieb 47 gern. Fig.7.

Fig.2 bezieht sich auf das neue und erfinderisches Verfahren zum Abisolieren von Kabeln, das mit den oben beschriebenen Aufbauten, aber auch mit anderen bekannten Maschinen neu durchgeführt werden könnte. In vier Verfahrensschritten wird ein Kabel 7 mit einem besonders langen Abisolierstück abisoliert:1. Einschieben des Kabels 7 durch Antriebsrotation der Bandantriebe 12 bis zur Abisolierposition unter den Messern 3. 2. Öffnen des rechten Bandantriebes 12b bis auf den Kabeldurchmesser, so dass das Kabel gerade noch zentriert gehalten wird, jedoch ohne einen Anpressdruck auf dieses auszuüben. Gleichzeitig Einschneiden der Messer 3 auf die Abisoliertiefe; Rückzug des Kabels 7 durch Rückzugsrotation des Bandantriebes 12a bis etwa zu der Position, in der dieser Bandantrieb 12a noch nicht den blanken Leiter 57 berührt.Dieses wäre eine Abisolierlänge, die bisher nur mit aufwendigen Teilabzugsschritten erzielt werden konnte. 3. Klemmung des Kabels 7 durch den Bandantrieb 12a und Abziehrotation des Bandantriebes 12b unter geeignetem Anpressdruck auf den Kabelmantel, so dass dieser vom Leiter 57 vollständig abgezogen wird. Gegenüber dem Bekannten ist somit neu auch ein Vollabzug mit einer dargestellten Abisolierlänge möglich. 4. Der Fachmann erkennt, dass weitere Schritte möglich wären.

### Bezugszeichenliste

A - G austauschbare Module
a - c Messervarianten
1 a,b oberer Werkzeugträger
2 a,b unterer Werkzeugträger
3 a,b,c,d,e,f,g,h obere und untere Werkzeuge (Messer o.dgl.)
5 a,b,c Antriebe
6 Achse
7 Draht
9 schwenkbare Führung
9b Führungsrohr
10 a,b Kabelvorschubeinheit
11 a-d Rollenantrieb für Endlosbänder oder direkt zum Antrieb des Kabels
12 Endlosbandantrieb
13 Endlosband, bevorzugt Zahnriemen mit griffiger Förderseite
14 a,b Spindel für Voreinstellung des Bandantrieb 12
16 a,b Schliessantriebe
17 Führung
24 Riemen
25 Antrieb
26 Schrittmotor bzw. gesteuerter Antrieb
27 Linearführungen
28 Anschlag
29 Andrückfedern
30 b Schwenkkörper
31 Anschlag
31b Gummipuffer
32 Verschiebemagnet
33 Stössel
34 Kurbelstange
35 Lager
40 a,b verschiebbare Führungshülsen
41 Drehgeber, Encoder
42 Induktivsensor o.dgl.
43 a,b Schnappverschluss
44 a,b Führungsstangen
45 a,b Antriebe hier pneumatisch, jedoch auch andere Antriebe möglich
46 Pressluftausblasöffnung
47 Antrieb, Schrittmotor
48 Zahnriemen
49 Schnappfedern
50 Antriebsrollenhaltekörper
51 a,b Stellmutter
52 a,b Mitnahmekörper
57 Leiter

## Patentansprüche

1. Kabelbearbeitungsvorrichtung mit Antriebs- und Bearbeitungsstationen mit Messern (3a, 3b), mit wenigstens einer beweglichen Führung (9,40) vor und/oder nach der Bearbeitungsstation (3) zur Zentrierung und Führung von Kabeln vor dem Einschneiden oder Abisolieren, wobei auf einer Seite der Bearbeitungsstation eine schwenkbare Führung (9) angeordnet ist, die im Betrieb nur eine Seite der Führung (9) aus der Achse (6) des Kabels schwenkt, während die andere Seite in der Achse (6) verbleibt, **dadurch gekennzeichnet, dass** die Führung (40) mit einer Ansteuerung verbunden ist, die während des Kabelbearbeitungsbetriebs die Führung fallweise vollständig aus dem Kabelweg bzw. von der Kabelachse (6) entfernt, wobei vor und hinter der Bearbeitungsstation (3) je eine Führung (9,40) und je wenigstens eine Antriebsstation als Band- oder Rollenvorschub angeordnet ist, und wobei auf einer Seite der Bearbeitungsstation eine Führung (40) und auf der anderen Seite der Bearbeitungsstation die schwenkbare Führung (9) angeordnet ist

2. Kabelbearbeitungsvorrichtung nach Anspruch 1, **dadurch gekennzeichnet, dass** wenigstens eine Führung (40) an der dem Kabelausgang zugewandten Seite der Bearbeitungsstation (3) angeordnet ist.

3. Kabelbearbeitungsvorrichtung nach Anspruch 1 oder 2, **dadurch gekennzeichnet, dass** entlang der Achse (6) vor und vorzugsweise auch hinter den Werkzeugen (3) je eine Kabelvorschubeinheit (10) vorgesehen ist, die über wenigstens je ein Rollenpaar (11) und/oder über je ein Endlosbandpaar (12) verfügt, und dass die Führung (40) in einer Radialebene zur Kabelachse (6) - vorzugsweise nach oben - entfernbar ist

4. Kabelbearbeitungsvorrichtung mit Antriebs- und Bearbeitungsstationen entlang eines Kabelwegs (6) mit einer schwenkbaren Führung (9) am Kabelweg (6) vor einer Bearbeitungsstation (3) und einer Führungshülse (40) am Kabelweg (6) nach dieser Bearbeitungsstation (3), nach einem der vorhergehenden Ansprüche, **dadurch gekennzeichnet, dass** diese Führungshülse (40) mit einer automatischen Ansteuerung verbunden ist, die es ermöglicht, diese Führungshülse (40) fallweise vollständig aus dem Kabelweg (6) zu entfernen.

5. Kabelbearbeitungsvorrichtung, insbesondere Abisoliervorrichtung mit einem Paar Werkzeugträger (1,2) zur Aufnahme von wenigstens zwei paarweise Werkzeugen (3), unteren Messers insbesondere Messern, z.B. eines obenren und eines unteren Messers und einer Führungseinrichtung zur Führung von Kabel vor und/oder nach den Werkzeugen, nach einem der vorhergehenden Ansprüchen, **dadurch gekennzeichnet, dass** die Führungseinrichtung eine seitlich oder nach oben bzw. unten entfernbare Führungsvorrichtung (9) aufweist, um das Rückschieben eines bereits jenseits der Werkzeuge (3) liegenden Kabels (7) gegen die Einschubrichtung kollisionsfrei zu ermöglichen.

6. Vorrichtung nach Anspruch 3, **dadurch gekennzeichnet, dass** die einander vis-àvis der Achse (6) liegenden Rollen (11) oder Endlosbänder (12) - vorzugsweise stufenlos - zueinander verstellbar sind und insbesondere kabelabhängig vorschubgesteuert öffen- und schliessbar sind, so dass z.B. ein ankommendes Kabel (7) zwischen geöffneten Rollen (11) bzw. Bändern (12) empfangen und mittels zueinander bewegten bzw. geschlossenen Rollen (11) bzw. Bändern (12) weitertransportiert wird und/oder gegeneinander unter einem - vorzugsweise variier- bzw. steuerbaren - Anpressdruck gehalten sind.

7. Vorrichtung nach Anspruch 3 oder 6, **dadurch gekennzeichnet, dass** im Falle von Endlosbandpaaren (12) die Endlosbänder (13), wenigstens eine der Rollen (11) oder eines der Bänder der Paare (12) ersatzlos abnehmbar und/oder durch vorzugsweise beschichtete Antriebsrollen (11) ersetzbar sind.

8. Vorrichtung nach einem der vorhergehenden Ansprüche, **dadurch gekennzeichnet, dass** wenigstens die oberen und unteren Rollen (11) bzw. Endlosbänder (12) eines Rollenpaares bzw. eines Endlosbandpaares relativ zueinander seitlich verschiebbar sind, so dass auf ein zwischenliegendes Kabel (7) ein Twistvorgang ausübbar ist.

9. Vorrichtung nach einem der vorhergehenden Ansprüche, **dadurch gekennzeichnet, dass** eine gemeinsame Grundplatte vorgesehen ist, an der entlang der Achse (6) Antriebs- bzw. Vorschub- bzw. Werkzeughalter- und/oder Mess- oder Markiermodule an vorgegebenen Positionen montier- bzw. demontier- oder austauschbar vorgesehen sind.

10. Vorrichtung nach einem der vorhergehenden Ansprüche, **dadurch gekennzeichnet, dass** dem Rollen- oder Bandvorschub weiters zugeordnet sind eine automatische Einfädelvorrichtung und/oder eine Messvorrichtung für die Zugbelastung am Kabel (7) und/oder eine dynamische Anpressdruckeinrichtung auf die Vorschubrollen (11) bzw. Vorschubbänder (12) insbesondere in Abhängigkeit von der Zugbelastung am Kabel (7) und/oder eine Kabelgeraderichtvorrichtung und/oder ein Längenzählmesswerk und/oder ein Kabelmantel-Auswerfet-gegebenenfalls mittels Pressluft-und/oder eine seitlich öffenbare Kabelführung zum Auswurf von Abisolierresten.

11. Vorrichtung nach einem der vorhergehenden Ansprüche, **dadurch gekennzeichnet, dass** an einer Verstellspindel (14) für die Werkzeugzustellung ein Encoder (41) angeordnet ist, der im Betriebszustand in Abhängigkeit von der Antriebsbewegung eines Antriebsmotors (23;16) - gegebenenfalls über den Vergleich mit einem vergleichbaren Encoderwert am Encoder dieses Antriebes (23;16) - für diese Verstellspindel (14) deren Drehbewegung überwacht, um ein erfolgtes Schliessen der Werkzeuge (3) zu detektieren und die Antriebsbewegung zu stoppen bzw. den Antrieb oder dessen Encoder zu eichen bzw. zu initialisieren, wobei die Verbindung zwischen Antriebsmotor (23;16) und Spindel (14) vorzugsweise elastisch - insbesondere über einen Zahnriemen (24) gekuppelt ist.

12. Vorrichtung nach einem der vorhergehenden Ansprüche, **dadurch gekennzeichnet, dass** ein Überwachungsglied vorgesehen ist, das den Öffnungszustand der Werkzeughalter (1) überwacht und kurz vor dem Schliessen derselben die Antriebskraft des Antriebsmotors (23;16) reduziert, so dass er die Werkzeughalter mit geringer Kraft in die Schliessposition bringt, wobei diese gegebenenfalls **dadurch** detektiert wird, dass ein mit dem Antriebsmotor (23;16) verbundener oder integrierter Encoder trotz Zuführung von Antriebsenergie seine Schritte der Drehbewegung verliert.

13. Vorrichtung nach einem der vorhergehenden Ansprüche, **dadurch gekennzeichnet, dass** ein Steuerglied mit Rechner vorgesehen ist, das im Betriebszustand nach Eingabe des Kabeldurchmessers und gegebenenfalls einer Kabeltypenbezeichnung und der gewünschten Abisolierlänge automatisch eine Voröffnung der Bandantriebe (12) und/oder einen Anpressdruck für das Abziehen langer Isolationsstücke berechnet und einstellt bzw. die Antriebe entsprechend steuert.

14. Vorrichtung nach einem der vorhergehenden Ansprüche, **dadurch gekennzeichnet, dass** dem zweiten Bandantrieb (12b) eine Steuerung und eine Greifvorrichtung zugeordnet ist, wobei erstere den Bandantrieb (12b) sofort nach Abisolierung des hinteren Endes des vorderen Kabelabschnittes das Kabel freigibt, so dass es durch die Greifvorrichtung entfernt werden kann.

## Claims

1. A cable processing device with drive and processing stations with knives (3a, 3b) with at least one moveable guide (9, 40) before and/or after the processing station (3) for the centring and guidance of cables before incision or insulation stripping, wherein
on one side of the processing station a pivotable guide (9) is arranged, which in operation pivots only one side of the guide (9) away from the axis (6) of the cable, while the other side remains on the axis (6),
**characterised in that** the guide (40) is connected with a controller, which during the cable processing operation on occasion removes the guide out of the cable path, i.e. away from the cable axis (6), wherein
ahead of and behind the processing station (3) in each case one guide (9, 40) and at least one drive station is arranged as a belt or roller feed, and wherein
on one side of the processing station one guide (40) is arranged, and on the other side of the processing station the pivotable guide (9) is arranged.

2. The cable processing device according to Claim 1,
**characterised in that** at least one guide (40) is arranged on the side of the processing station (3) facing towards the cable exit.

3. The cable processing device according to Claim 1 or 2,
**characterised in that** along the axis (6) ahead of and preferably also behind the tools (3) in each case one cable feed unit (10) is provided, which features in each case at least one roller pair (11) and/or in each case one endless belt pair (12), and
**in that** the guide (40) can be removed in a plane radial to the cable axis (6), preferably upwards.

4. The cable processing device with drive and processing stations along a cable path (6) with a pivotable guide (9) on the cable path (6) ahead of a processing station (3) and a guide sleeve (40) on the cable path (6) after this processing station (3), according to one of the previous claims,
**characterised in that** this guide sleeve (40) is connected with an automatic controlled, which enables this guide sleeve (40) on occasion to be completely removed from the cable path (6).

5. The cable processing device, in particular an insulation stripping device with a pair of tool holders (1, 2) for the accommodation of at least two paired tools (3) (in particular knives, e.g. an upper and a lower knife) and a guide unit for the guidance of cable before and/or after the tools, according to one of the previous claims,
**characterised in that** the guide unit has a guide device (9) that can be removed laterally or upwards and/or downwards, so as to enable a cable (7) already positioned beyond the tools (3) to be pushed back against the direction of feed in a collision-free manner.

6. The device according to Claim 3,
**characterised in that** the rollers (11) or endless belts (12) positioned opposite one another relative to the axis (6) can be adjusted relative to one another - preferably in a continuous manner - and in particular can be opened and closed controlled by the feed in a manner dependent on the cable, so that e.g. an incoming cable (7) is received between opened rollers (11) or belts (12) and is transported onwards by means of rollers (11) or belts (12) that are moved towards one another, i.e. are closed, and/or are held against one another under a contact pressure that can preferably be varied and/or regulated.

7. The device according to Claim 3 or 6,
**characterised in that** in the case of endless belt pairs (12) the endless belts, at least one of the rollers (11), or one of the belts of the pairs (12), can be removed without replacement and/or can be replaced by preferably coated drive rollers (11).

8. The device according to one of the previous claims,
**characterised in that** at least the upper and lower rollers (11), or endless belts (12), of one roller pair, or one endless belt pair, can be displaced laterally relative to one another, so that a twisting action can be exerted onto a cable (7) positioned between them.

9. The device according to one of the previous claims,
**characterised in that** a common bedplate is provided, on which drive and/or feed and/or tool holder and/or measurement or marker modules are provided at prescribed positions along the axis (6), and can be installed, de-installed or replaced.

10. The device according to one of the previous claims,
**characterised in that** further assigned to the roller or belt feed are an automatic threading device, and/or a measurement device for the tensile load on the cable (7), and/or a dynamic contact pressure unit onto the feed rollers (11), or feed belts (12), in particular as a function of the tensile load on the cable (7), and/or a cable straightening device- and/or a length counter and/or a cable sheath ejector - if appropriate by means of compressed air - and/or a cable guide that can be opened laterally for the ejection of insulation stripping residues.

11. The device according to one of the previous claims,
**characterised in that** an encoder (41) is arranged on an adjusting spindle (14) for the tool setting, which in the operating state monitors the rotational movement of this adjustment spindle (14) as a function of the drive movement of a drive motor (23, 15) - if appropriate via the comparison with a comparable encoder value on the encoder of this drive (23, 16) - so as to detect that a closure of the tools has taken place and to stop the drive movement and/or to calibrate and/or initialize the drive or its encoder, wherein
the connection between drive motor (23, 16) and spindle (14) is preferably elastically coupled - in particular by means of a toothed belt (24).

12. The device according to one of the previous claims,
**characterised in that** a monitoring element is provided, which monitors the opening state of the tool holder (1) and shortly before the latter is closed reduces the drive force of the drive motor (23, 16), so that it brings the tool holders with low force into the closed position, wherein
if appropriate this is detected **in that** an encoder connected or integrated with the drive motor (23, 16), despite the supply of power to the drive, loses its steps of rotational movement.

13. The device according to one of the previous claims,
**characterised in that** a control element with computer is provided, which in the operating state after input of the cable diameter and if appropriate a cable type designation and the desired length of stripped insulation automatically calculates an initial opening of the belt drives (12) and/or a contact pressure for the extraction of long insulation pieces and adjusts, i.e. controls the drives correspondingly.

14. The device according to one of the previous claims,
**characterised in that** a controller and a gripper device are assigned to the second belt drive (12b), wherein
the former releases the belt drive (12b) immediately after the stripping of insulation from the rear end of the forward cable section so that it can be removed by the gripper device.

## Revendications

1. Dispositif d'usinage de câble comportant des stations d'entraînement et d'usinage à lames (3a, 3b), comprenant au moins un guide mobile (9, 40) en amont et/ou en aval de la station d'usinage (3) pour le centrage et le guidage de câbles avant leur entaillage ou leur dénudage, dans lequel est disposé, sur un côté de la station d'usinage, un guide pivotable (9) qui, en cours de fonctionnement, ne fait pivoter qu'un côté du guide (9) depuis l'axe (5) du câble, tandis que l'autre côté reste dans l'axe (6), **caractérisé en ce que** le guide (40) est relié à une commande qui, en cours d'usinage du câble, éloigne totalement le guide du passage du câble ou de l'axe du câble (6) selon les cas, un guide (9, 40) et au moins une station d'entraînement sous forme de système d'avance à bande ou à rouleaux étant disposés chaque fois en amont et en aval de la station d'usinage (3) et un guide (40) étant chaque fois disposé d'un côté de la station d'usinage et le guide pivotable (9) étant disposé de l'autre côté de la station d'usinage.

2. Dispositif d'usinage de câble selon la revendication 1, **caractérisé en ce qu'**au moins un guide (40) est disposé du côté tourné vers la sortie de câble de la station d'usinage (3).

3. Dispositif d'usinage de câble selon la revendications 1 ou 2, **caractérisé en ce que**, le long de l'axe (6), en amont et aussi de préférence en aval des outils (3), il est prévu chaque fois une unité d'avance de câble (10) qui dispose d'au moins chaque fois une paire de rouleaux (11) et/ou d'une paire de bandes sans fin (12) et que le guide (40) peut être éloigné dans un plan radial par rapport à l'axe du câble (6) -de préférence vers le haut.

4. Dispositif d'usinage de câble comportant des stations d'entraînement et d'usinage le long d'un passage de câble (6) comprenant un guide pivotable (9) sur le passage de câble (6) en amont d'une station d'usinage (3) et un manchon de guidage (40) sur le passage de câble (6) en aval de cette station d'usinage (3) selon une des revendications précédentes, **caractérisé en ce que** ce manchon de guidage (40) est relié à une commande automatique qui permet selon les cas d'éloigner totalement le manchon de guidage (40) du passage de câble (6).

5. Dispositif d'usinage de câble, notamment dispositif de dénudage, comportant une paire de porte-outils (1, 2) destinés à recevoir au moins deux outils en paire (3), notamment des lames, par exemple une lame supérieure et une lame inférieure, et un dispositif de guidage pour le guidage du câble en amont et/ou en aval des outils selon une des revendications précédentes, **caractérise en ce que** le dispositif de guidage présente un dispositif de guidage (9) pouvant être éloigné latéralement ou vers le haut ou le bas afin de permettre de repousser sans collision un câble (7) se trouvant déjà au-delà des outils (3) contre le dispositif d'insertion.

6. Dispositif selon la revendication 3, **caractérisé en ce que** les rouleaux (11) ou bandes sans fin (12) placés les uns face aux autres par rapport à l'axe (6) -de préférence sans échelons- sont réglables les uns par rapport aux autres et peuvent notamment être ouverts ou fermés en fonction du câble et sous avance contrôlés, de sorte que, par exemple, un câble arrivant (7) est reçu entre des rouleaux (11) ou bandes (12) en position ouverte et est transporté plus loin au moyen de rouleaux déplacés les uns par rapport aux autres ou de rouleaux (11) ou bandes (12) en position fermée, et/ou sont maintenus les uns contre les autres sous une force de compression - de préférence variable ou contrôlable.

7. Dispositif selon la revendication 3 ou 6, **caractérisé en ce que**, dans le cas de paires de bandes sans fin (12), les bandes sans fin (13), au moins un des rouleaux (11) ou une des bandes des paires (12) peuvent être enlevés sans les remplacer et/ou remplacés par des rouleaux d'entraînement (11) de préférence revêtus.

8. Dispositif selon une des revendications précédentes, **caractérisé en ce qu'**au moins les rouleaux supérieurs et inférieurs (11) ou les bandes sans fin (12) d'une paire de rouleaux ou d'une paire de bandes sans fin peuvent être décalés latéralement les uns par rapport aux autres, de sorte qu'une action de torsion peut être exercée sur un câble intercale (7).

9. Dispositif selon une des revendications précédentes, **caractérisé en ce qu'**il est prévu une plaque de base commune sur laquelle sont placés, à des positions prédéfinies le long de l'axe (6), des modules d'entraînement ou d'avance ou de porte-outils et/ou de mesure ou de marquage qui peuvent être montés ou démontés ou échangés.

10. Dispositif selon une des revendications précédentes, **caractérisé en ce que** sont associés en outre au système d'avance à rouleaux ou à bande un dispositif d'enfilage automatique et/ou un dispositif de mesure pour la sollicitation par traction du câble (7) et/ou un dispositif de compression dynamique agissant sur les rouleaux d'avance (11) ou bandes d'avance (12), notamment en fonction de la sollicitation par traction du câble (7), et/ou un dispositif d'alignement rectiligne du câble et/ou une unité de décomptage de longueur et/ou un éjecteur de gaine de câble, le cas échéant à l'aide d'air comprimé, et/ou un guide de câble s'ouvrant latéralement pour éjecter les résidus de dénudage.

11. Dispositif selon une des revendications précédentes, **caractérisé en ce que**, au niveau d'une broche de réglage (14) de l'approche de l'outil, est disposé un codeur (14) qui, en cours de fonctionnement, en fonction du mouvement d'entraînement d'un moteur d'entraînement (23 ; 16) -éventuellement par comparaison avec une valeur de codage comparable du codeur de cet entraînement (23 ; 16)- surveille pour cette broche de réglage (14) son mouvement de rotation afin de détecter une fermeture effective des outils (3) et de stopper le mouvement d'entraînement ou d'étalonner ou d'initialiser l'entraînement ou son codeur, la liaison entre le moteur d'entraînement (23 ; 16) et la broche (14) étant couplée de préférence élastiquement - notamment par l'intermédiaire d'une courroie crantée (24).

12. Dispositif selon une des revendications précédentes, **caractérisé en ce qu'**il est prévu un élément de surveillance qui surveille la position d'ouverture des porte-outils (1) et, juste avant la fermeture de ces derniers, réduit la force motrice du moteur d'entraînement (23 ; 16), de sorte qu'il amène les porte-outils en position de fermeture avec moins de force, celle-ci étant détectée par le fait qu'un codeur relié au moteur d'entraînement (23 ; 16) ou intégré, malgré l'apport d'énergie motrice, perd ses étapes de mouvement de rotation.

13. Dispositif selon une des revendications précédentes, **caractérisé en ce qu'**il est prévu un élément de commande qui, en, cours de fonctionnement, après saisie du diamètre du câble et éventuellement d'une désignation de type de câble et de la longueur de dénudage souhaitée, calcule et règle automatiquement une pré-ouverture des entraînements des bandes (12) et/ou une force de compression pour l'extraction de longs tronçons d'isolant ou commande les entraînements en conséquence.

14. Dispositif selon une des revendications précédentes, **caractérisé en ce que** sont associés au deuxième entraînement de bande (12b) une commande et un dispositif de préhension, la première lançant l'entraînement de bande (12b) juste après le dénudage de l'extrémité arrière de la section avant du câble, de sorte que le câble peut être enlevé par le dispositif de préhension.
